# EUROPEAN PATENT APPLICATION

(11) **EP 2 506 396 A2**
(43) Date of publication of application: **03.10.2012**
(21) Application number: 12158080.7
(22) Date of filing: 05.03.2012
(51) Int. Cl.: H02K 1/14

(54) **Motor, pump and device using such a pump**

(30) Priority: 30.03.2011 JP 2011074021
(71) Applicant: Panasonic Corporation, Osaka 571-8501 (JP)
(72) Inventor: Hashimoto, Toshiharu, Chuo-ku, Osaka 540-6207 (JP)
(74) Representative: Appelt, Christian W.

(57) **Abstract**

Plate materials (37P) of an extended portion (37) are bonded to one another by substantially V-like crimped portions (50) in which center portions (50c) in a longitudinal direction (Y) protrude toward a base portion (38) while both end portions (50a) and (50b) in the longitudinal direction (Y) are being coupled to the plate materials (37P). Moreover, on a peripheral edge portion (60) in a lateral direction (X) of the crimped portion (50) of the plate material (37P) arranged on an outermost side in a direction away from the base portion (38) among the plurality of plate materials (37P) of the extended portion (37), an opening portion (53) that reaches an aperture (52) of the crimped portion (50) from the peripheral edge portion (60) is formed.

## Description

### BACKGROUND OF THE INVENTION

The present invention relates to a motor, to a pump that uses the motor as a drive source, and to a pump-driven instrument that mounts the pump thereon.

Heretofore, for example, as disclosed in Japanese Examined Patent Publication No. S60-10818 (published in 1985), a technology has been proposed, in which, in the case of manufacturing a stacked core by using a die device, plate materials are sequentially stacked on one another one by one while being crimped.

In this patent literature, at a predetermined number of the continuously stacked plate materials, opening portions corresponding to a protrusion shape of such crimping are provided at the crimp-formed portions, and by such opening portions, separation of the continuously stacked plate materials is facilitated per every predetermined number thereof.

### SUMMARY OF THE INVENTION

Incidentally, for the purpose of enhancing efficiency of a motor, a plurality of plate materials are further stacked on a base portion of a stator core formed by stacking the plurality of plate materials on one another, whereby an extended portion is provided. Hence, while the extended portion made of the plurality of plate materials can be easily separated by applying thereto the technology disclosed in the above-described conventional technology, one end portion in a longitudinal direction of each of such crimped portions is formed as a cut-and-raised protrusion separated from the plate materials in the conventional technology.

Therefore, there is a possibility that the above-described cut-and-raised protrusion may be deformed easily in an event of press-fitting the crimped portions into a fitting hole formed in the base portion of the stator core. Hence, it was possible that the crimped portions may be imperfectly press-fitted into the fitting hole, and that, even if the crimped portions can be press-fitted thereinto, it may become difficult to ensure its bonding strength since the cut-and-raised protrusion is prone to be deformed.

In this connection, it is an object of the present invention to obtain a motor, which facilitates the separation of the stacked plate materials by every predetermined number while sufficiently ensuring the bonding strength between the base portion and the extended portion of the stator core, and can thereby achieve robustness and the efficiency enhancement, to obtain a pump that uses the motor as a drive source, and to obtain a pump-driven instrument that mounts the pump thereon.

In order to achieve the foregoing object, the present invention is a motor, which includes: a rotor in which a plurality of magnets are arranged in a circumferential direction; and a stator that has a coil portion and is arranged opposite to the rotor, in which the stator includes a stator core, the stator core including: a yoke portion arranged concentrically with the rotor; a plurality of teeth portions which protrude toward the magnets from a side surface of the yoke portion, the side surface being opposite to the magnets, and which have the coil portion wound therearound; and magnetic pole portions which are provided on tip end portions of the teeth portions and are arranged opposite to the magnets, and in which the stator core is formed as a stacked body obtained by stacking a plurality of plate materials on one another in a rotation axis direction of the rotor, and on an end surface in a stacking direction of at least one among the yoke portion, each of the teeth portions and each of the magnetic pole portions of a base portion of the stator core, a plurality of plate materials are further stacked to thereby form an extended portion, in which the plate materials of the extended portion are bonded to one another by substantially V-like crimped portions in which center portions in a longitudinal direction protrude toward the base portion while both end portions in the longitudinal direction are being coupled to the plate materials, and in which at a peripheral edge portion in a lateral direction of the crimped portion of the plate material arranged at an outermost side in a direction away from the base portion among the plurality of plate materials of the extended portion, an opening portion that reaches an aperture of the crimped portion from the peripheral edge portion is formed.

In accordance with the present invention, the crimped portions which bond the plurality of plate materials of the extended portion to one another are formed into the substantially V-shape in which the center portions in the longitudinal direction protrude toward the base portion while both end portions in the longitudinal direction are being coupled to the plate materials. Accordingly, a protruding portion thus formed is provided with large strength. In such a way, also in the event of bonding the extended portion to the base portion, sufficient bonding strength can be ensured when the protruding portion of the crimped portions, which protrudes from the extended portion, is press-fitted into the base portion.

Moreover, at the peripheral edge portion in the lateral direction of the crimped portion of the plate material arranged on the outermost side in the direction away from the base portion among the plurality of plate materials of the extended portion, the opening portion that reaches the aperture of the crimped portion from the peripheral edge portion is formed. In such a way, it can be facilitated to separate the stacked plate materials per every predetermined number.

Hence, the robustness and efficiency enhancement of the motor can be achieved, and by using the motor that is made robust and highly efficient, robustness and efficiency enhancement of the pump and the pump-driven instrument that uses the pump can be achieved.

### BRIEF DESCRIPTION OF THE DRAWINGS

Fig. 1 is a cross-sectional view schematically showing an embodiment of a pump that uses a motor of the present invention.
Fig. 2 is a perspective view of principal portions of a stator core shown in Fig. 1.
Fig. 3 is a plan view schematically showing principal portions of the motor shown in Fig. 1.
Fig. 4 is a schematic cross-sectional view taken along a line A-A of Fig. 3.
Fig. 5 is an exploded cross-sectional view schematically showing a magnetic pole portion and extended portions, which are shown in Fig. 4.
Figs. 6(a) and 6(b) are perspective views showing each of the extended portions of the motor according to the first embodiment of the present invention: Fig. 6(a) is a perspective view of a front side thereof; and Fig. 6(b) is a perspective view of a back side thereof, which is inverted from Fig. 6(a) in a longitudinal direction.
Fig. 7 is a plan view of Fig. 6(a).
Figs. 8(a) and 8(b) are cross-sectional views of Fig. 7: Fig. 8(a) is an enlarged cross-sectional view taken along a line B-B of Fig. 7; and Fig. 8(b) is an enlarged cross-sectional view taken along a line C-C of Fig. 7.
Figs. 9(a) and 9(b) are explanatory views sequentially showing a crimping step of a plate material in which opening portions are formed in the extended portion in which a plurality of the plate materials are stacked on one another.
Fig. 10 is an enlarged cross-sectional view corresponding to Fig. 8(a), showing an extended portion of a motor according to a second embodiment of the present invention.
Fig. 11 is an enlarged cross-sectional view corresponding to Fig. 8(a), showing an extended portion of a motor according to a third embodiment of the present invention.
Fig. 12 is a perspective view showing an extended portion of a motor according to a fourth embodiment of the present invention.
Fig. 13 is a plan view of Fig. 12.
Fig. 14 is an enlarged cross-sectional view taken along a line D-D of Fig. 13.
Fig. 15 is a perspective view showing an extended portion of a motor according to a fifth embodiment of the present invention.
Fig. 16 is a plan view of Fig. 15.
Fig. 17 is an enlarged cross-sectional view taken along a line E-E of Fig. 16.
Fig. 18 is a plan view showing an extended portion of a motor according to a sixth embodiment of the present invention.
Fig. 19 is a view schematically showing an internal structure of a dishwashing machine that uses the pump of Fig. 1.
Fig. 20 is a view schematically showing a boiler unit that uses the pump of Fig. 1.
Fig. 21 is a view schematically showing an internal structure of a washing machine that uses the pump of Fig. 1.

### DETAILED DESCRIPTION OF THE PREFERRED EMBODIMENTS

A description is made below of embodiments of the present invention by referring to the drawings.

### [First Embodiment]

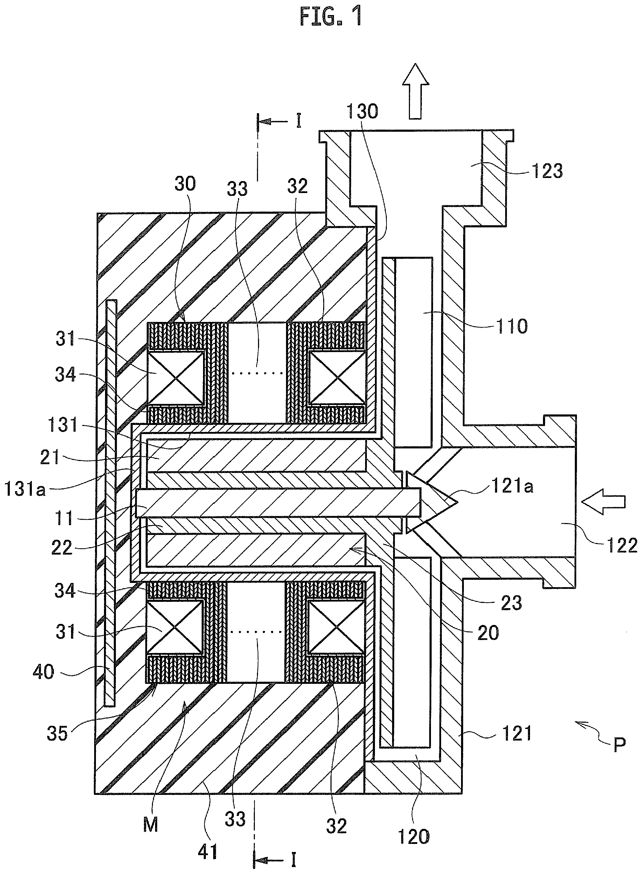

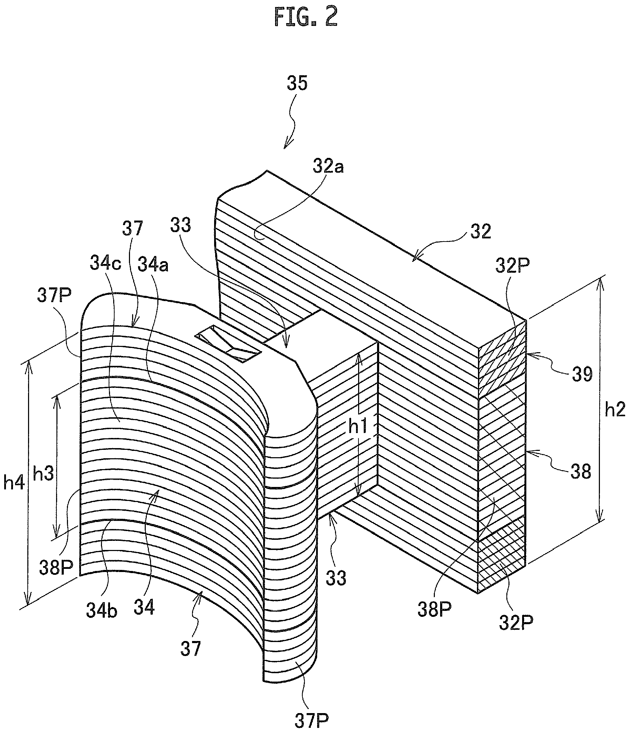

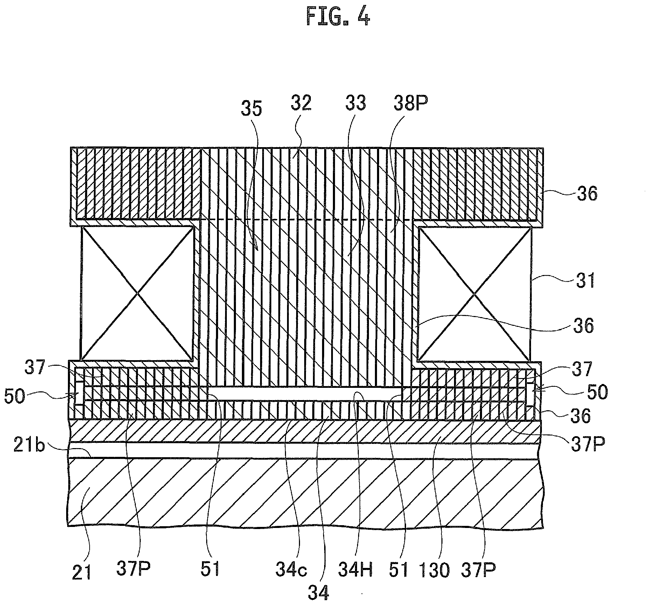

Fig. 1 is a view showing an embodiment of a pump P that uses a motor M according to the present invention, and Fig. 2 to Fig. 5 are views showing principal portions of the motor M that drives the pump P.

As shown in Fig. 1, the pump P includes: an impeller 110 rotated by a rotation shaft 11 of the motor M; a pump chamber 120 that houses this impeller 110 therein; and a pump case 121 that forms a contour of this pump chamber 120.

Meanwhile, as shown in Fig. 1, the motor M includes: a rotor 20 that has a magnet 21; and a stator 30 in which a coil portion 31 is wound around a stator core 35. The coil portion 31 is energized, whereby the rotor 20 and the rotation shaft 11 rotate.

In the pump case 121, there are formed a suction port 122 that communicates with a center portion of the pump chamber 120; and a discharge port 123 that communicates in a tangential direction of an outer circumference of the pump chamber 120. Then, by rotation of the impeller 110, liquid such as water sucked from the suction port 122 is discharged from the discharge port 123 by centrifugal force.

The motor M is arranged at an opposite side from the suction port 122 with respect to the impeller 110, and a separation plate 130 partitions the motor M and the pump chamber 120. Then, an outer circumferential portion of the separation plate 130 is liquid-tightly bonded to the pump case 120 while interposing a sealing material (not shown) therebetween.

Moreover, at a center portion of the separation plate 130, a housing chamber 131 is provided as a recess which rotatably houses the magnet 21 of the rotor 20 therein, and the rotor 20 and the stator 30 are liquid-tightly partitioned from each other by the housing chamber 131.

The rotor 20 is composed of: a rotor body 22 with a cylindrical shape; the magnet 21 that is provided on an outer wall of the rotor body 22 and is multipolarly magnetized in a circumferential direction; and a support plate 23 onto which the impeller 110 is to be attached. In this embodiment, the rotor 20 is configured to rotate together with the rotation shaft 11 rotatably supported by a shaft support portion 121 a provided in the pump case 121 and by an end plate 131 a of the housing chamber 131. Then, in this embodiment, the stator 30 is arranged opposite to an outer circumferential side of this rotor 20, whereby the motor M is composed as an inner rotor type motor.

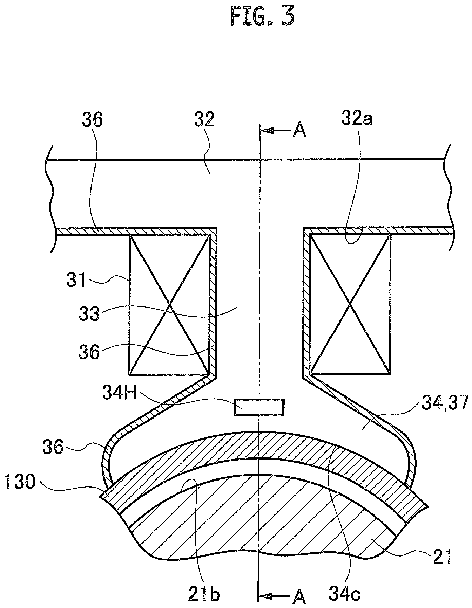

As also shown in Fig. 2 and Fig. 3, the stator 30 includes an annular yoke portion 32 arranged concentrically with the rotor 20. On an inner side surface 32a of this yoke portion 32, which is opposite to the magnet 21, teeth portions 33 whose number corresponds to the number of poles of the magnet 21 are protruded at an equal interval in the circumferential direction.

Around each of the teeth portions 33, the above-mentioned coil portion 31 is wound, and on a more tip end portion of the teeth portion 33 than such a wound portion thereof, a magnetic pole portion 34 which is arranged close and opposite to the magnet 21 is provided. At this time, the yoke portion 32, the teeth portions 33 and the magnetic pole portions 34 compose the stator core 35. As shown in Fig. 3, the outside of this stator core 35 is covered with protection resin 36; however, an opposite surface 34c of the magnetic pole portion 34 to the magnet 21 is exposed without providing the protection resin 36 thereon.

Moreover, in the motor M, a control board 40 is provided as shown in Fig. 1. This control board 40 is configured to receive a signal coming from a position detection sensor (not shown) that detects a rotation position of the rotor 20, to control a current flowing through the coil portion 31, and to thereby control a magnetic field to be generated in the magnetic pole portion 34.

Then, the stator 30 and the control board 40 are arranged on an opposite side from the pump chamber 120 while taking the separation plate 130 as a boundary therebetween, and these stator 30 and control board 40 are entirely covered with mold resin 41. In such a way, the stator 30 and the control board 40 are integrated with the separation plate 130 and the pump case 121 via the mold resin 41, thereby ensuring the strength of the whole of the pump P including the motor M.

As shown in Fig. 2, in the yoke portion 32, the teeth portion 33 and the magnetic pole portion 34, which compose the stator core 35, its base portion 38 is formed by stacking, on one another, plate materials 38P such as a plurality (for example, 20 to 30 pieces) of integrated steel plates, which are made of a soft magnetic material. At this time, on both end surfaces in a stacking direction of the base portion 38 of the yoke portion 32, plate materials 32P are further stacked by the number corresponding to a winding thickness of the coil portion 31, and the whole of the base portion 38 and the plate materials 32P is allowed to have a height h2.

In this state, a height h1 in a stacking direction (rotation axis direction) of the teeth portion 33 is smaller than the height h2 in the same direction of the yoke portion 32 by the winding thickness of the coil portion 31. Moreover, a height h3 of the magnetic pole portion 34 is equal to, the height h1 of the teeth portion 33. Hence, an area of the magnetic pole portion 34, which is opposite to a magnetized surface 21b of the magnet 21, becomes a small area corresponding to the height h3 equal to that of the teeth portion 33.

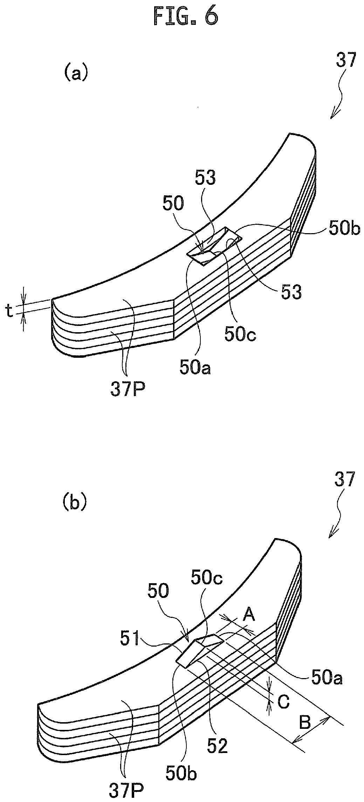

Therefore, in this embodiment, for the purpose of increasing the area of such an opposite surface of the magnetic pole portion 34, extended portions 37 are provided on both end surfaces 34a and 34b in a stacking direction of the base portion 38 in the magnetic pole portion 34. As shown in Figs. 6(a) and 6(b), these extended portions 37 are formed by stacking a plurality of plate materials 37P on one another in a similar way to the base portion 38. In this case, the plate materials 37P of the extended portions 37 can use a soft magnetic material such as steel plates, which are the same as that for the yoke portion 32.

Then, as shown in Fig. 2, a height h4 of the whole of the magnetic pole portion 34 becomes substantially equal to the height h2 of the yoke portion 32, and the entire area where the magnetic pole portion 34 including the extended portions 37 is opposite to the magnetized surface 21b of the magnet 21 can be increased. Moreover, the height h4 of the whole of the magnetic pole portion 34 becomes a height substantially equal to a length between ends in an axial direction of the coil portion 31. In such a way, an output torque of the rotor 20 can be increased while suppressing upsizing of the motor M.

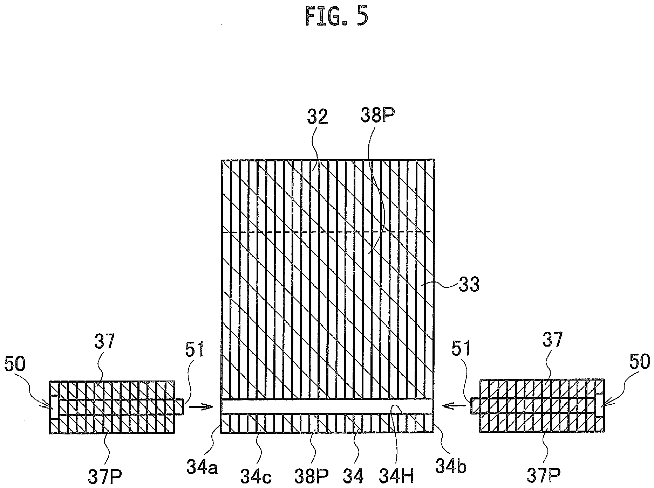

When attaching the extended portions 37 to the base portion 38 of the magnetic pole portion 34, as shown in Fig. 5, crimped portions 50 formed on the plate materials 37P of the extended portions 37 are press-fitted to the through hole (joint hole) 34H formed on the base portion 38 of the magnetic pole portion 34.

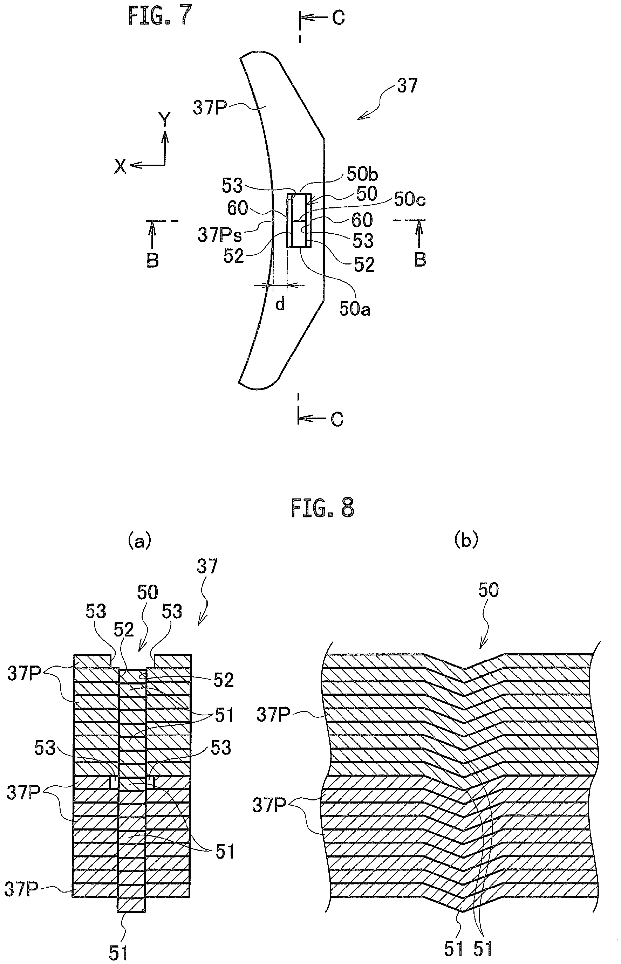

That is to say, as shown in Figs. 6(a), 6(b) and 7, at the plate materials 37P of each of the extended portions 37, the crimped portions 50 are formed by punching the plate materials 37P from a side opposite from the side bonded to the base portion 38, and the plurality of plate materials 37P are mutually fixed to one another by the crimped portions 50. At this time, the crimped portions 50 of this embodiment has a structure in which both end portions 50a and 50b in a longitudinal direction (Y-direction in Fig. 7) are coupled to the respective plate materials 37P, and a center portion 50c in the longitudinal direction protrudes toward the base portion 38 of the magnetic pole portion 34. That is to say, in each of the crimped portions 50, a protruding portion 51 protrudes in a substantially V-shape while forming apertures 52 on both sides thereof in a lateral direction (X-direction in Fig. 7).

Hence, on a side of each of the extended portions 37, which is bonded to the base portion 38 of the magnetic pole portion 34, as shown in Fig. 6(b), the protruding portion 51 protrudes in a mount shape from the center portion 50c in the longitudinal direction of the crimped portions 50, and this protruding portion 51 is press-fitted into a through hole 34H of the base portion 38 of the magnetic pole portion 34. As a matter of course, a dimension A in the lateral direction of each of the crimped portions 50 (protruding portions 51) is a dimension that allows the protruding portion 51 to be press-fitted into the through hole 34H in terms of a breadth, and moreover, a dimension B in the longitudinal direction of each of the crimped portions 50 (protruding portions 51) is a dimension that allows the protruding portion 51 to be fitted to the through hole 34H in terms of a longitudinal width.

Hence, bonding strength among the plate materials 37P stacked on one another through the crimped portions 50 is sufficiently ensured. Moreover, in this embodiment, a depth of each of the crimped portions 50, that is, a protruding dimension C of the protruding portion 51 is substantially equal to a thickness of each of the plate materials 37P.

Incidentally, in an event of stacking the plate materials 37P on one another and forming the extended portions 37 by using a die device, the crimped portions 50 are intermittently and sequentially punched as blanking materials which serve as raw material plates of the plate materials 37 are being fed. Then, in a subsequent step, formed regions of the crimped portions 50 are sequentially stacked on one another while stamping the raw material plates into an outer shape of the extended portions 37, and at the time of such stacking, the stacked plate materials 37P are pressurized in the stacking direction. In such a way, as shown in Figs. 8(a) and 8(b), the plate materials 37P can be mutually fixed to one another by the crimped portions 50. However, in the case where the plate materials 37P are continuously stacked on one another as described above, it is necessary to separate the plate materials 37P per every predetermined number that is necessary to form the extended portions 37.

Here, in this embodiment, as shown in Figs. 6(a), 6(b) and 7, a contrivance to facilitate such separation is made on the crimped portions 50 of the plate materials 37P that are arranged on the outermost sides in the directions away from the base portion 38 of the magnetic pole portion 34, among the plurality of plate materials 37P which form the extended portions 37.

That is to say, in each of the crimped portions 50 of the plate materials 37P on such outermost sides, slit-like opening portions 53 which reach the aperture 52 of the crimped portion 50 are provided at the peripheral edge portions 60 in the lateral direction (X-direction). In this embodiment, on the peripheral edge portions 60 on both sides in the lateral direction X of the crimped portions 50, the opening portions 53 are individually provided over the overall length in the longitudinal direction Y of the crimped portion 50. Hence, in the event where the plate materials 37P are continuously stacked on one another by the die device, as shown in Figs. 8(a), the opening portions 53 become located by every predetermined number necessary for each of the extended portions 37.

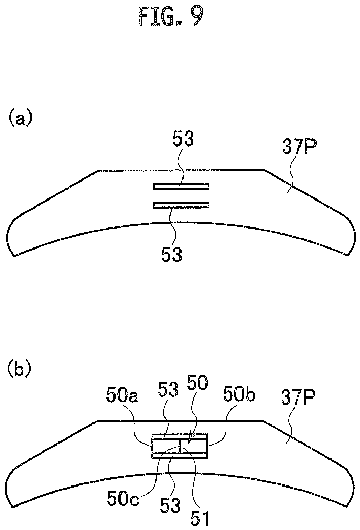

Note that, for the purpose of providing the opening portions 53 in the crimped portion 50, as shown in Fig. 9(a), the opening portions 53 are stamped in advance at a stage before punching the crimped portion 50, and thereafter as shown in Fig. 9(b), the crimped portion 50 is punched. The opening portions 53 can reduce contact portions (press-fitted portions) thereof with the protruding portion 51 when the crimped portion 50 (protruding portion 51) of the plate material 37P to be stacked next is fitted. In such a way, it becomes possible to easily separate the plate materials 37P at portions where the opening portions 53 are formed.

Moreover, in this embodiment, as shown in Fig. 7, a shortest dimension d from one of the opening portions 53 to a side edge 37Ps of the plate material 37P in which the opening portions 53 are provided is set at least equal to or more than a thickness dimension t (refer to Fig. 6(a)) of the plate material 37P.

With the above-described configuration, in accordance with the motor M of this embodiment, the plate materials 37P of each of the extended portions 37 are mutually bonded to one another by the substantially V-like crimped portions 50 in which the center portions 50c in the longitudinal direction protrude toward the base portion 38 while both end portions 50a and 50b in the longitudinal direction are being coupled to the plate materials 37P. In such a way, in the crimped portions 50, the protruding portions 51 protrude with large strength since both end portions 50a and 50b in the longitudinal direction are in the coupled state to the plate materials 37P. Hence, in addition to the event of coupling the plate materials 37P to one another, also in the event of coupling each of the extended portions 37 to the base portion 38, sufficient bonding strength can be ensured when the crimped portion 50 (protruding portion 51) that protrudes from the extended portion 37 is press-fitted into the through hole 34H of the base portion 38.

Moreover, in accordance with this embodiment, on the peripheral edge portions 60 in the lateral direction X of the crimped portion 50 of the plate material 37P that is arranged on the outermost side in the direction away from the base portion 38 among the plurality of plate materials 37P of the extended portion 37, there are formed the opening portions 53 which reach the aperture 52 of the crimped portion 50 from the peripheral edge portions 60. Therefore, in the event where a large number of the plate materials 37P are stacked on one another by the die device while being coupled to one another by the crimped portions 50, the contact portion of such a crimped portion 50 concerned with the crimped portion 50 (protruding portion 51) of the plate material 37P to be stacked next can be reduced. In such a way, it becomes possible to easily separate the stacked plate materials 37P at the portions where the opening portions 53 are formed.

Hence, in accordance with the motor M of this embodiment, while sufficiently ensuring the bonding strength between the extended portion 37 and the base portion 38, it is facilitated to separate the plate materials 37P, which are stacked on one another in the step of forming the extended portion 37 by the die device, by every predetermined number necessary to form the extended portion 37. In such a way, the plate materials 37P can be separated from one another without being deformed or damaged, and accordingly, processing accuracy for the extended portion 37 can be further enhanced, and the motor M, which is robust and highly efficient, can be provided.

Note that, in this embodiment, the description has been made in detail of the bonding of the extended portion 37 of the magnetic pole portion 34 to the base portion 38 thereof; however, as shown in Fig. 2, each of extended portions 39 of the yoke portion 32 can also be bonded to the base portion 38 by using similar crimped portions 50. That is to say, this embodiment can be applied to any configurations in which the extended portion is provided on an end surface in the stacking direction of at least one of the yoke portion 32, teeth portion 33 and magnetic pole portion 34 of the base portion 38.

Moreover, in this embodiment, the opening portions 53 are provided over the overall length in the longitudinal direction Y of the crimped portion 50. Therefore, at the separating portion of the plate material 37P of the extended portion 37, the contact portion thereof in the longitudinal direction Y with the crimped portion 50 (protruding portion 51) can be eliminated. Also, in this embodiment, the opening portions 53 as described above are provided on the peripheral edge portions 60 on both sides in the lateral direction X of the crimped portion 50. Accordingly, the contact portions of the opening portions 53 with the crimped portion 50 (protruding portion 51) can be eliminated on both sides in the lateral direction X, and thus, it can be further facilitated to separate the stacked plate materials 37P.

Furthermore, in this embodiment, the shortest dimension d from one of the opening portions 53 to the side edge 37Ps of the plate material 37P in which the opening portions 53 are provided is set to be equal to or more than the thickness dimension t of the plate material 37P. Accordingly, deformation of the blank materials can be suppressed at the time of stamping the opening portions 53. Moreover, decrease of the strength around the opening portions 53 in the stamped plate material 37P can be suppressed.

Still further, in this embodiment, the pump P is composed by using the above-mentioned motor M that is robust and highly efficient, and accordingly, the pump P can be made robust and highly efficient by enjoying the above-mentioned effects inherent in the motor M.

### [Second Embodiment]

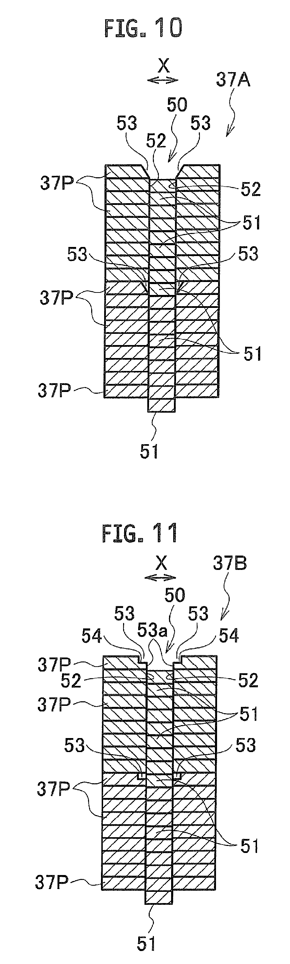

Fig. 10 is a view showing a second embodiment of the present invention, and a description of the second embodiment is made while assigning the same reference numerals to the same constituent portions as those of the first embodiment and omitting a duplicate description.

An extended portion 37A of a motor M in this embodiment is different from the extended portion 37 of the above-described first embodiment mainly in that a width between side surfaces 53a in the lateral direction X of the opening portions 53 is reduced so as to be narrower toward a base portion 38 (that is, toward a punching direction).

As shown in Fig. 10, in this embodiment, both side surfaces 53a in the lateral direction of the opening portions 53 are inclined, and in this case, a width between terminal ends of the inclined side surfaces 53a is set at a width at which the terminal ends are brought into contact with a crimped portion 50 (protruding portion 51) of a plate material 37P to be stacked next.

As a matter of course, also in this embodiment, in a similar way to the above-described first embodiment, in the crimped portion 50, both end portions 50a and 50b thereof in the longitudinal direction Y become coupled to the plate material 37P, and a center portion 50c thereof in the longitudinal direction Y protrudes toward the base portion 38.

With the above-described configuration, in accordance with the motor M of this embodiment, the width between the side surfaces 53a of each of the opening portions 53 is reduced, whereby a cross-sectional area of the plate materials 37P which become the core can be suppressed from being decreased in comparison with the case where the side surfaces 53a are formed perpendicularly. In such a way, in addition to the effects of the first embodiment, there is an advantage that decrease of an area of a portion that serves as a passage of a magnetic flux generated in the coil portion 31 is suppressed to thereby make it possible to suppress the reduction of magnetic efficiency.

Moreover, in this embodiment, the side surfaces 53a of the opening portions 53 are inclined, and the width between the terminal ends of the side surfaces 53a is set at the width at which the terminal ends are brought into contact with the protruding portion 51 of the crimped portion 50. In such a way, only the terminal ends of the side surfaces 53a are brought into contact with the crimped portion 50 (protruding portion 51) of the plate material 37P to be stacked next, and accordingly, the stacked plate materials 37P can be easily separated at the portion where the opening portions 53 are formed.

Note that the motor M of this embodiment may be used for the pump P shown in the first embodiment, and the pump P in that case can enjoy the above-mentioned effects inherent in the motor M of this embodiment, and can be made as a pump P that is robust and more highly efficient.

### [Third Embodiment]

Fig. 11 is a view showing a third embodiment of the present invention, and a description of the third embodiment is made while assigning the same reference numerals to the same constituent portions as those of the first embodiment and omitting a duplicate description.

An extended portion 37B of a motor M of this embodiment is different from the extended portion 37 of the above-described second embodiment mainly in that, on the side surfaces 53a in the lateral direction X of the opening portions 53, there are provided step portions 54 in which a width therebetween is reduced step by step toward the base portion 38 (toward the punching direction). In this case, a width between terminal end portions provided on the end portions of the step portions 54, between which the width is reduced, is set at a width at which the terminal end portions are brought into contact with the plate material 37P to be stacked next.

Note that, in this embodiment, the number of steps in each of the step portions 54 is set at one so as to include one wide-width portion and one narrow-width portion; however, the step portion 54 may be formed to have a plurality of steps.

As a matter of course, also in this embodiment, in a similar way to the above-described first embodiment, in the crimped portion 50, both end portions 50a and 50b thereof in the longitudinal direction Y become coupled to the plate material 37P, and a center portion 50c thereof in the longitudinal direction Y protrudes toward the base portion 38 of the magnetic pole portion 34.

With the above-described configuration, in accordance with the motor M of this embodiment, the step portions 54 are provided on the side surfaces 53a of each of the opening portions 53, whereby the cross-sectional area of the plate materials 37P which become the core can be suppressed from being decreased in comparison with the case where the side surfaces 53a are formed perpendicularly. In such a way, in addition to the effects of the first embodiment, the decrease of the area of the portion that serves as the passage of the magnetic flux generated in the coil portion 31 is suppressed to thereby make it possible to suppress the reduction of the magnetic efficiency.

Moreover, in this embodiment, the step portions 54 are provided on the side surfaces 53a of the opening portions 53, and the terminal end portions of the step portions 54 are brought into contact with the protruding portion 51 of the crimped portion 50. In such a way, the end portions of the side surfaces 53a are only brought into contact with a narrow range of the protruding portion 51 of the crimped portion 50 of the plate material 37P to be stacked next, and accordingly, the stacked plate materials 37P can be easily separated at the portion where the opening portions 53 are formed.

Note that the motor M of this embodiment may be used for the pump P shown in the first embodiment, and the pump P in that case can enjoy the above-mentioned effects inherent in the motor M of this embodiment, and can be made as a pump P that is robust and more highly efficient.

### [Fourth Embodiment]

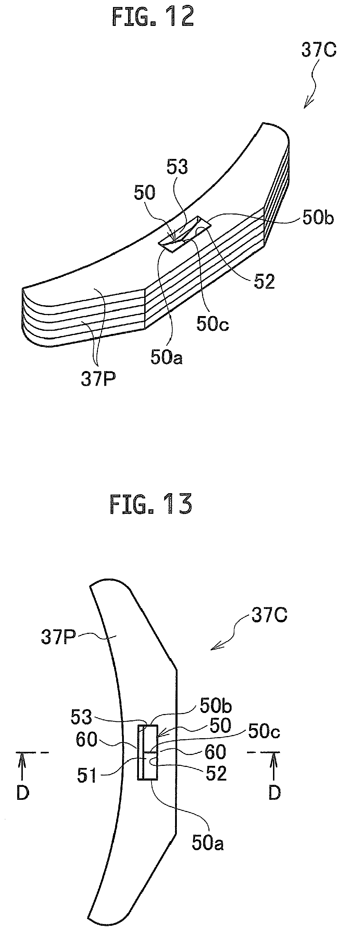

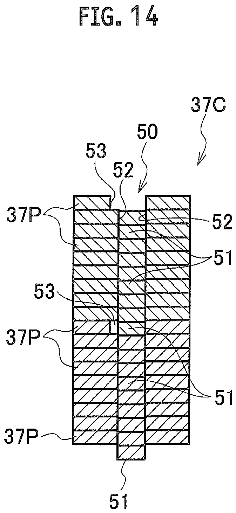

Figs. 12 to 14 are views showing a fourth embodiment of the present invention, and a description of the fourth embodiment is made while assigning the same reference numerals to the same constituent portions as those of the first embodiment and omitting a duplicate description.

An extended portion 37C of a motor M of this embodiment is different from the extended portion 37 of the above-described first embodiment mainly in that the opening portion 53 is provided on one of the peripheral edge portions 60 in the lateral direction X of the crimped portion 50. In this case, the other one of the peripheral edge portions 60 where the opening portion 53 is not provided has a structure with only the aperture 52 formed when punched in a similar way to the general crimped portions 50.

Moreover, in this embodiment, the opening portion 53 provided on one of the peripheral edge portions 60 is provided over the overall length in the longitudinal direction Y of the crimped portion 50.

As a matter of course, also in this embodiment, in a similar way to the above-described first embodiment, both end portions 50a and 50b of the crimped portion 50 in the longitudinal direction Y become coupled to the plate material 37P, and a center portion 50c in the longitudinal direction Y thereof protrudes toward the base portion 38 of the magnetic pole portion 34.

With the above-described configuration, in accordance with the motor M of this embodiment, the opening portion 53 is provided only on one of the peripheral edge portions 60 in the lateral direction X of the crimped portion 50. In such a way, as shown in Fig. 12 to Fig. 14, the crimped portion 50 is brought into contact with the crimped portion 50 of the plate material 37P to be stacked next only by the other one of the peripheral edge portions 60, and accordingly, the stacked plate materials 37P can be easily separated at the portion where the opening portions 53 are formed.

Moreover, in accordance with this embodiment, in comparison with the case where the opening portions 53 are provided on the both-side peripheral edge portions 60 as in the above-described first embodiment, the cross-sectional area of the plate materials 37P which become the core can be suppressed from being decreased. In such a way, in addition to the effects of the first embodiment, the decrease of the area of the portion that serves as the passage of the magnetic flux generated in the coil portion 31 is suppressed to thereby make it possible to suppress the reduction of the magnetic efficiency.

As a matter of course, the motor M of this embodiment may be used for the pump P shown in the first embodiment, and in that case, the pump P can enjoy the above-mentioned effects inherent in the motor M of this embodiment, and can be made as a pump P that is robust and more highly efficient.

### [Fifth Embodiment]

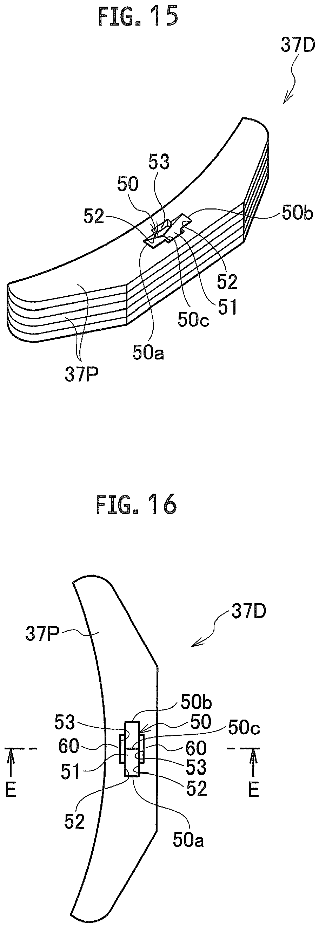

Figs. 15 to 17 are views showing a fifth embodiment of the present invention, and a description of the fifth embodiment is made while assigning the same reference numerals to the same constituent portions as those of the first embodiment and omitting a duplicate description.

An extended portion 37D of a motor M of this embodiment is different from the extended portion 37 of the above-described first embodiment mainly in that the opening portions 53 are partially provided at the center portion 50c in the longitudinal direction Y of the crimped portion 50.

As a matter of course, also in this embodiment, in a similar way to the above-described first embodiment, both end portions 50a and 50b of the crimped portion 50 in the longitudinal direction Y become coupled to the plate material 37P, and a center portion 50c thereof in the longitudinal direction Y protrudes toward the base portion 38 of the magnetic pole portion 34.

With the above-described configuration, in accordance with the motor M of this embodiment, the opening portions 53 are provided at the center portion in the longitudinal direction Y of the crimped portion 50. Hence, as shown in Fig. 15 to Fig. 17, a contact area of the crimped portion 50 with the crimped portion 50 (protruding portion 51) of the plate material 37P to be stacked next can be reduced at the center portion in the longitudinal direction Y where the contact area with the protruding portion 51 is large. In such a way, the stacked plate materials 37P can be easily separated at the portion where the opening portions 53 are formed.

Moreover, also in this embodiment, in comparison with the extended portion 37 of the above-described first embodiment, the cross-sectional area of the plate materials 37P which become the core can be suppressed from being decreased. In such a way, in addition to the effects of the first embodiment, decrease of the area of the portion that serves as the passage of the magnetic flux generated in the coil portion 31 is suppressed to thereby make it possible to suppress the reduction of the magnetic efficiency.

As a matter of course, the motor M of this embodiment may be used for the pump P shown in the first embodiment, and in that case, the pump P can enjoy the above-mentioned effects inherent in the motor M of this embodiment, and can be made as a pump P that is robust and more highly efficient.

### [Sixth Embodiment]

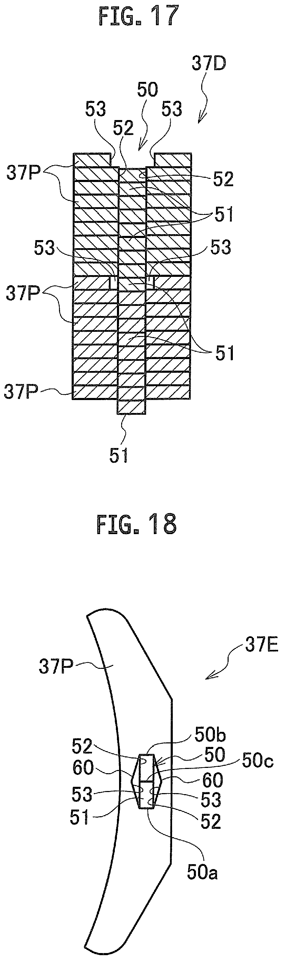

Fig. 18 is a view showing a sixth embodiment of the present invention, and a description of the sixth embodiment is made while assigning the same reference numerals to the same constituent portions as those of the first embodiment and omitting a duplicate description.

An extended portion 37E of a motor M of this embodiment is different from the extended portion 37 of the above-described first embodiment mainly in that the opening portions 53 are formed into a triangular shape in which the apertures 52 on both sides of the crimped portion 50 in the lateral direction X are taken as their bases. In this embodiment, such triangular opening portions 53 are formed into an isosceles triangular shape with their vertices located on an extension of the center portion 50c in the longitudinal direction Y of the crimped portion 50.

As a matter of course, also in this embodiment, in a similar way to the above-described first embodiment, both end portions 50a and 50b of the crimped portion 50 in the longitudinal direction Y become coupled to the plate material 37P, and a center portion 50c thereof in the longitudinal direction Y protrudes toward the base portion 38 of the magnetic pole portion 34.

With the above-described configuration, in accordance with the motor M of this embodiment, the opening portions 53 are formed into the triangular shape in which the apertures 52 on both sides in the lateral direction X of the crimped portion 50 are taken as the bases. In such a way, in a similar way to the above-described first embodiment, the contact portion of the crimped portion 50 with the crimped portion 50 (protruding portion 51) of the plate material 37P to be stacked next can be eliminated, and the stacked plate materials 37P can be easily separated at the portion where the opening portions 53 are formed.

Moreover, also in this embodiment, in comparison with the extended portion 37 of the above-described first embodiment, the cross-sectional area of the plate materials 37P which become the core can be suppressed from being decreased. In such a way, in addition to the effects of the first embodiment, decrease of the area of the portion that serves as the passage of the magnetic flux generated in the coil portion 31 is suppressed to thereby make it possible to suppress the reduction of the magnetic efficiency.

As a matter of course, the motor M of this embodiment may be used for the pump P shown in the first embodiment, and in that case, the pump P can enjoy the above-mentioned effects inherent in the motor M of this embodiment, and can be made as a pump P that is robust and more highly efficient.

### [Seventh Embodiment]

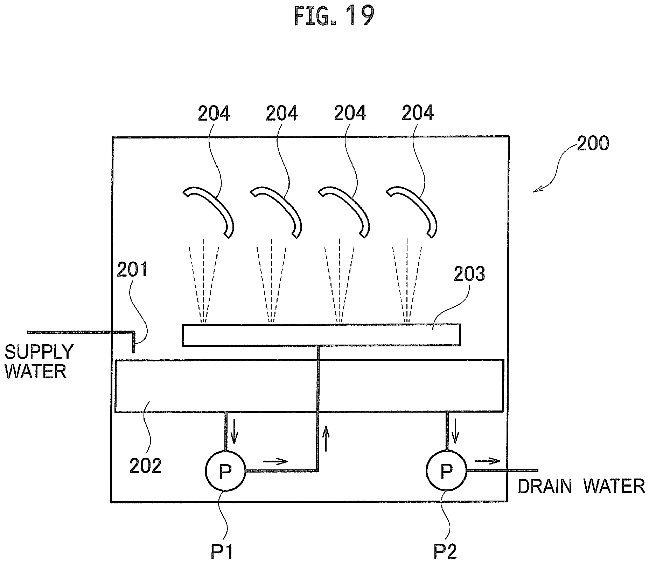

Fig. 19 is a view showing a seventh embodiment of the present invention, in which a dishwashing machine 200 as a pump-driven instrument is composed by using the pump P that uses, as a drive source, the motor M of the above-described first embodiment.

In the dishwashing machine 200, water or hot water is supplied from a water supply port 201 to a reservoir 202, and the water or the hot water which is supplied to the reservoir 202 is fed to nozzles 203 by a washing pump P1. Then, the water or the hot water is ejected from the nozzles 203, whereby dishes 204 set in the dishwashing machine 200 are washed.

Note that, in this embodiment, the water or the hot water which is already used for the washing is made to fall down to be reserved in the reservoir 202, and is fed again to the nozzles 203 by the washing pump P1. Then, after the water or the hot water is circularly used for the washing for a predetermined time, the washing pump P1 is stopped, and a drainage pump P2 is activated, whereby the water or the hot water in the reservoir 202 is drained.

Next, after water or hot water is supplied again from the water supply port 201 to the reservoir 202, the dishes are rinsed by activating the washing pump P1 for a predetermined time, and thereafter, the washing pump P1 is stopped, and the drainage pump P2 is activated, whereby the water or the hot water in the reservoir 202 can be drained. Then, such rinsing is performed by repeating the above-described operations a few times, whereby the dishes 204 set in the dishwashing machine 200 can be washed.

Here, in this embodiment, the robust and highly efficient pump P of the above-described first embodiment is applied to the washing pump P1 and the drainage pump P2, which are mentioned above. As described above, in the dishwashing machine 200 of this embodiment, the washing pump P1 and the drainage pump P2 are composed by using the robust and highly efficient pump P, whereby robustness and efficiency enhancement of the dishwashing machine 200 can be achieved.

Note that, in this embodiment, as motors for use in the pumps P1 and P2, any one of the motors M shown in the above-mentioned second to sixth embodiments can also be used, and similar effects can be achieved even in such a case.

### [Eighth Embodiment]

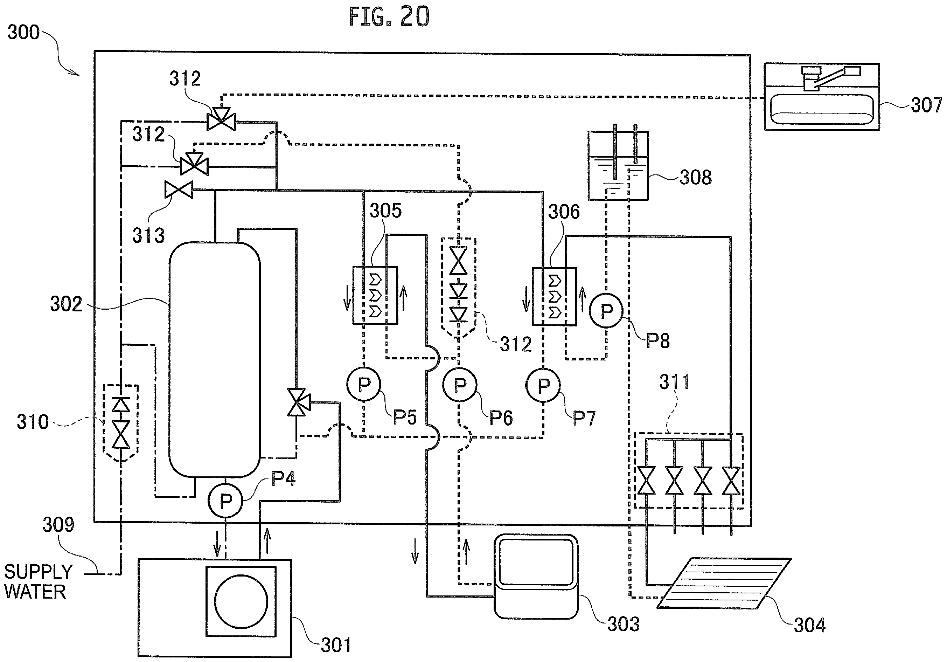

Fig. 20 is a view showing an eighth embodiment of the present invention in which a boiler unit 300 as a pump-driven instrument is composed by using the pump P that uses, as a drive source, the motor M of the above-described first embodiment. A description is made of this boiler unit 300 by taking, as an example, a boiler system using CO₂ as a cooling medium, the boiler system being capable of saving electric power and also being environmentally friendly.

Specifically, the boiler unit 300 includes a heat pump 301, a hot water storage unit 302, a bath 303, a floor heater 304, a reheating heat exchanger 305, a heat exchanger 306, and the like. Moreover, in the boiler unit 300, there are provided: a hot water faucet 307 for a kitchen or a washbasin; and an auxiliary tank 308 that stores hot water. In addition, a pressure reducing valve 310 is provided downstream of a water supply port 309; and a thermal valve 311 is provided for the floor heater 304. Moreover, a plurality of mixing valves 312 and a safety valve 313 are provided in the respective pipes.

Then, a plurality of pumps P4, P5, P6, P7 and P8 are driven, and in addition, the above-mentioned respective valves 310, 311, 312 and 313 are controlled, whereby the water or the hot water can be supplied at a desired temperature and flow rate to the bath 303 and the hot water faucet 307 for a kitchen or a washbasin.

Here, in this embodiment, the robust and highly efficient pump P of the above-described first embodiment is applied to the above-mentioned pumps P4 to P8. As described above, in the boiler unit 300 of this embodiment, the respective pumps P4 to P8 are composed by using the robust and highly efficient pump P, whereby robustness and efficiency enhancement of the boiler unit 300 can be achieved.

Note that, in this embodiment, the boiler unit is not limited to the boiler unit 300 as an electric boiler system that uses the above-mentioned heat pump, and can also be applied to a gas boiler system and a cogeneration system. Here, similar effects to those mentioned above can be achieved by using the pump P.

Moreover, also in this embodiment, as motors for use in the pumps P4, P5, P6, P7 and P8, any one of the motors M shown in the above-mentioned second to sixth embodiments can also be used, and similar effects can be achieved even in such a case.

### [Ninth Embodiment]

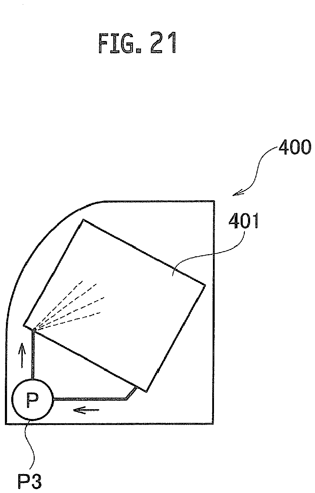

Fig. 21 is a view showing a ninth embodiment of the present invention, in which a washing machine 400 as a pump-driven instrument is composed by using the pump P that uses, as a drive source, the motor M of the above-described first embodiment.

The washing machine 400 controls rotation of a washing machine tub 401 by a motor (not shown). The washing machine 400 rotates the washing machine tub 401, and circulates water in the washing machine tub 401 by a circulating pump P3, thereby washing clothes and the like.

Here, in this embodiment, the robust and highly efficient pump P of the above-described first embodiment is applied to the circulating pump P3 mentioned above. As described above, in the washing machine 400 of this embodiment, the circulating pump P3 is composed by using the robust and highly efficient pump P that is made compact, whereby the robustness and efficiency enhancement of the washing machine 400 can be achieved.

Note that, also in this embodiment, as a motor for use in the pump P3, any one of the motors M shown in the above-mentioned second to sixth embodiments can also be used. Similar effects can be achieved in such a case also.

The description has been made above of the preferred embodiments of the present invention; however, the present invention is not limited to the above-described embodiments, and is modifiable in various ways.

For example, the description has been made of the foregoing embodiments by taking the case of the inner rotor type as an example; however, without being limited to this, the present invention is applicable to an outer rotor type in which the stator is arranged on an inner circumference side of the rotor.

## Claims

1. A motor (M), comprising:
a rotor (20) in which a plurality of magnets (21) are arranged in a circumferential direction; and
a stator (30) that has a coil portion (31) and is arranged opposite to the rotor (20),
wherein the stator (30) includes a stator core (35), the stator core (35) including: a yoke portion (32) arranged concentrically with the rotor (20); a plurality of teeth portions (33) which protrude toward the magnets (21) from a side surface (32a) of the yoke portion (32), the side surface (32a) being opposite to the magnets (21), and which have the coil portion (31) wound therearound; and magnetic pole portions (34) which are provided on tip end portions of the teeth portions (33) and are arranged opposite to the magnets (21), and
wherein the stator core (35) is formed as a stacked body obtained by stacking a plurality of plate materials (38P) on one another in a rotation axis direction of the rotor (20), and on an end surface in a stacking direction of at least one among the yoke portion (32), each of the teeth portions (33) and each of the magnetic pole portions (34) of a base portion (38) of the stator core (35), a plurality of plate materials (37P) are further stacked to thereby form an extended portion (37),
wherein the plate materials (37P) of the extended portion (37) are bonded to one another by substantially V-like crimped portions (50) in which center portions (50c) in a longitudinal direction (Y) protrude toward the base portion (38) while both end portions (50a,50b) in the longitudinal direction (Y) are being coupled to the plate materials (37P), and
wherein on a peripheral edge portion (60) in a lateral direction (X) of the crimped portion (50) of the plate material (37P) arranged at an outermost side in a direction away from the base portion (38) among the plurality of plate materials (37P) of the extended portion (37), an opening portion (53) that reaches an aperture (52) of the crimped portion (50) from the peripheral edge portion (60) is formed.

2. The motor (M) according to claim 1, wherein the opening portion (53) is provided over an overall length in the longitudinal direction (Y) of the crimped portion (50).

3. The motor (M) according to claim 1, wherein the opening portion (53) is provided at the center portion (50c) in the longitudinal direction (Y) of the crimped portion (50).

4. The motor (M) according to any one of claims 1 to 3, wherein a plurality of the opening portions (53) are provided at the peripheral edge portions (60) on both sides in the lateral direction (X) of the crimped portion (50).

5. The motor (M) according to any one of claims 1 to 3, wherein the opening portion (53) is provided at one of the peripheral edge portions (60) in the lateral direction (X) of the crimped portion (50).

6. The motor (M) according to any one of claims 1 to 5, wherein a shortest dimension (d) from the opening portion (53) to a side edge (37Ps) of the plate material (37P) in which the opening portion (53) is provided is set to be equal to or more than a thickness dimension (t) of the plate material (37P).

7. The motor (M) according to any one of claims 1 to 6, wherein a width between side surfaces (53a) in the lateral direction of the opening portion (53) is reduced so as to be narrower toward the base portion (38).

8. A pump (P), wherein the motor (M) according to any one of claims 1 to 7 is used as a drive source.

9. A pump-driven instrument (200,300,400), wherein the pump (P) according to claim 8 is mounted thereon.
